# EUROPÄISCHE PATENTSCHRIFT

(11) **EP 1 737 748 B1**
(45) Veröffentlichungstag und Bekanntmachung des Hinweises auf die Patenterteilung: **11.07.2012**
(21) Anmeldenummer: 05707618.4
(22) Anmeldetag: 24.02.2005
(51) Int. Cl.: B65D 75/00

(54) **VERFAHREN ZUR HERSTELLUNG EINES SCHLAUCHBEUTELS MIT EINGESIEGELTEM STAND- BZW. STEHBODEN UND DECKEL-/SCHULTERTEIL**
METHOD FOR THE PRODUCTION OF A TUBULAR BAG COMPRISING A SEALED-IN STANDING BOTTOM OR STAND-UP BOTTOM AND A COVER/SHOULDER PART
PROCEDE DE PRODUCTION D'UN SACHET TUBULAIRE A FOND PLAT OU DROIT INTEGRE PAR SCELLAGE ET PARTIE DE COUVERCLE/D'EPAULEMENT

(30) Priorität: 31.03.2004 DE 102004015959; 06.05.2004 DE 102004022375
(43) Veröffentlichungstag der Anmeldung: 03.01.2007
(73) Patentinhaber: Huhtamaki Ronsberg, Zweigniederlassung der Huhtamaki Deutschland GmbH & Co. KG, 87671 Ronsberg/Allgäu (DE)
(72) Erfinder: MICHALSKY, Andreas, 87766 Memmingerberg (DE)
(74) Vertreter: Popp, Eugen
(86) Internationale Anmeldenummer: PCT/EP2005/001961
(87) Internationale Veröffentlichungsnummer: WO 2005/105601

(56) Entgegenhaltungen:
- EP-A2- 0 116 355
- DE-A1- 10 221 432
- US-A- 5 385 294

## Beschreibung

Die Erfindung betrifft ein Verfahren zum Herstellen eines Schlauchbeutels, gemäß dem Oberbegriff des Patentanspruchs 1.

Schlauchbeutel mit einem eingesiegelten Stand- bzw. Stehboden und Deckel sind seit längerem bekannt, z.B. aus der DE 102 21 432 A1, und werden zum Abfüllen, Aufbewahren und Transportieren von festen, flüssigen und pastösen Materialien verwendet.

Nachteile dieser bekannten Schlauchbeutel bestehen jedoch in einer mangelhaften Standfestigkeit sowie in der Tatsache, daß sie nur für Materialien geeignet sind, die kein Permeations- bzw. Diffusionsvermögen durch die den Schlauchbeutel bildenden Materialien hindurch aufweisen bzw. die sich inert gegenüber in den Schlauchbeutel eindiffundierende Stoffe verhalten.

Ersteres Problem, nämlich die unzureichende Standfestigkeit herkömmlicher Schlauchbeutel resultiert in aller Regel aus einer mehr oder weniger labilen, zumeist ovalen Form ihrer Standfläche, so daß die Schlauchbeutel entlang der Längsseite der Oval-Form und aufgrund der instabilen Bauart ihrer Standfläche eine erhöhte Kippneigung aufweisen.

Zweiteres Problem ist darin begründet, daß die bisher in der Praxis üblichen Schlauchbeutel nur unzureichende Barriereeigenschaften, insbesondere gegenüber ein- bzw. austretenden Gasen, aufweisen, da in aller Regel nur der Schlauchbeutelkörper mit einer Barriereschicht versehen ist. Üblicherweise gilt dies jedoch nicht für den Boden der Schlauchbeutel und genauso wenig für deren oberen Abschluß, wie Deckel und/oder, sofern vorhanden, Schulterteil. Sowohl das Bodenteil, als auch den Schlauchbeutel nach oben abschließende Komponenten sind in aller Regel aus einem herkömmlichen Kunststoff gefertigt, der keine Barriereeigenschaften aufweist. Insofern besteht an diesen Schlauchbeutelflächen die Möglichkeit für einen unerwünschten Stoffaustausch mit der Umgebung, der durch einen Durchtritt von Substanzen durch die Schlauchbeutelwandung verursacht ist. Es sei angemerkt, daß mit Wandung im Sinne dieser Erfindung nicht nur die Seitenwand, sondern auch obere und untere Abschlüsse des Schlauchbeutels zu verstehen sind.

Im druckschriftlichen Stand der Technik, z.B. gemäß US-A-5,385,294 oder EP 0 116 355 A, wurde das vorgenannte Problem dadurch gelöst, daß auch Boden und Deckel eine oder mehrere Barriereschichten jeweils in Form einer Metall-, insbesondere Aluminiumschicht aufweisen. Der Nachteil derartiger Barriereschichten besteht darin, daß entsprechend ausgebildete Laminate für eine Massenherstellung dreidimensional geformter Teile eines Schlauchbeutels nicht oder nur begrenzt geeignet sind.

Die Aufgabe der Erfindung besteht darin, die vorgenannten Nachteile des Standes der Technik in kostengünstiger und einfacher Weise zu lösen und ein Verfahren für die Herstellung eines Schlauchbeutels mit Stand- bzw. Stehboden zur Verfügung zu stellen, das eine kostengünstige Massenanfertigung eines Schlauchbeutels mit hoher Standsicherheit und hoher Dichtigkeit gegenüber einer unerwünschten Permeation bzw. Diffusion von Stoffen durch die Schlauchbeutelwandung ermöglicht.

Diese Aufgabe wird durch ein Verfahren gemäß Patentanspruch 1 gelöst.

Insbesondere wird die Aufgabe dadurch gelöst, daß der Boden des Schlauchbeutels durch ein Tiefziehenverfahren hergestellt wird, wobei ein Material gewählt wird, das sich zum einen zum Tiefziehen eignet und zum anderen eine Barriereschicht aufweist, die die erforderliche Dichtigkeit auch des tiefgezogenen Bodens gewährleistet.

Ein besonderer Schwerpunkt dieser erfindungsgemäßen Lösung liegt ferner darin, daß der Boden in einer Weise ausgeprägt ist, die ihn als Stand- bzw. Stehboden optimiert. Dies ist dadurch gewährleistet, daß der Boden eine vorgegebene Form aufweist, die mit einer gewissen Steifigkeit versehen ist, wobei Ränder vorgesehen sind, mittels derer der Stand- bzw. Stehboden in den Schlauchbeutelkörper einsiegelbar ist.

Wie erwähnt, besteht ein wesentlicher Vorteil der Erfindung darin, daß der Boden sowie das Deckel- und/oder Schulterteil zumindest eine Barriereschicht aufweisen, durch die gewährleistet ist, daß ein unerwünschter Stofftransport durch die Schlauchbeutelwandung, in diesem Fall explizit den Boden sowie einen oberen Abschluß des Schlauchbeutels, unterbleibt. Als Barrierematerial eignet sich insbesondere Ethylvinylalkohol (EVOH). Vorzugsweise ist dieses Barrierematerial zwischen siegelbaren Lagen des Laminats angeordnet.

Um dem erfindungsgemäß hergestellten Stand- bzw. Stehboden sowie nach Wunsch auch dem Deckel- bzw. Schulterteil eine ausreichende Steifigkeit zu verleihen, ist dieser aus einem Material gefertigt, das eine Dicke im Bereich von 50 µm bis 500 µm, bevorzugt 100 µm bis 400 µm und besonders bevorzugt 150 µm bis 350 µm aufweist. Dieses Material wird einem Tiefziehvorgang unterzogen, wobei in rationeller Weise eine gleichzeitige Fertigung von mehreren Stand- bzw. Stehböden aus einem Folienzuschnitt möglich ist. Selbiges gilt für Deckel bzw. Schulterteile.

Vorzugsweise ist die Form des Stehbodens sowie des Deckel- und/oder Schulterteils so gewählt, daß die bei einem Separieren der einzelnen Teile entstehenden Schnittkanten im in den Schlauchbeutelkörper eingesetztem Zustand nicht mit dem Schlauchbeutelinhalt in Kontakt kommen, so daß nicht zu befürchten ist, daß eine Reaktion zwischen dem Schlauchbeutelinhalt und dem Barrierematerial stattfindet. Dies ist beispielsweise dadurch gewährleistet, daß die Schnittkanten der Teile nach außen weisen.

Eine weitere Möglichkeit, einen solchen Kontakt zu vermeiden, besteht darin, das Bodenteil sowie das Deckel- bzw. Schulterteil nicht in den Schlauchbeutelkörper einzusetzen, sondern umgekehrt.

Ein wesentlicher Vorteil der erfindungsgemäßen Anwendung eines Tiefziehverfahrens zum Herstellen der Stand- bzw. Stehböden sowie Deckel- und/oder Schulterteilen besteht darin, daß mit diesem Verfahren gleichzeitig sehr viele Schlauchbeutelabschlußteile fertigbar sind, so daß der mit der Anfertigung dieser Teile verbundene Aufwand minimiert und eine kostengünstige Massenfertigung möglich ist. Darüber hinaus ist es mittels des Tiefziehverfahrens möglich, Stehböden und Deckel- bzw. Schulterteile zu bilden, die aus einem Laminat gefertigt sind und eine oder mehrere Barriereschichten aufweisen.

Erfindungsgemäß ist der Boden aus im wesentlichen demselben Material hergestellt wie der Schlauchbeutelkörper selbst, wobei der Boden, respektive das zu seiner Herstellung verwendete Material, dicker und somit steifer ausgebildet sein kann als der Schlauchbeutelkörper, respektive dessen Material, selbst.

Der Schlauchbeutelkörper selbst ist entweder als lap-seal aus einem Folienzuschnitt bzw. aus einer Endlosfolie gefertigt oder schlauchförmig extrudiert. Durch die lap-seal Ausbildung der Schlauchbeutelkörpernaht bzw. durch die Extrusion des Schlauchbeutelkörpers ist eine annähernd runde Form des Schlauchbeutelkörpers vorgegeben, was in Kombination mit dem erfindungsgemäßen Stand- bzw. Stehboden zu einer hohen Standsicherheit führt.

Sowohl ein als lap-seal hergestellter Schlauchbeutelkörper als auch ein extrudierter, insbesondere coextrudierter, Körper weisen jeweils eine oder mehrere Barriereschichten auf. In vorteilhafter Weise ist somit gewährleistet, daß ein unerwünschter Materialtransport durch die Schlauchbeutelwandung unterbleibt.

Selbstverständlich gilt dies ebenso für den Deckel bzw. ein möglicherweise vorgesehenes Schulterteil des Schlauchbeutels, das ebenso, wie der Schlauchbeutelboden, ebenfalls tiefgezogen sein kann und, zumindest im Falle des Schulterteils; ebenfalls eine oder mehrere Barriereschichten aufweist. Dies gilt auch für das zugehörige Deckel- bzw. Schulterteil.

Das Deckelteil weist gemäß einer Ausführungsform darüber hinaus zumindest eine Ansatzvorrichtung für einen Ausgießer und/oder einen Verschluß an einer dafür vorgesehenen Öffnung des Deckelteils auf. Vorzugsweise ist zu diesem Zweck in dem Deckel ein Loch ausgestanzt, das einen nach innen gekrempten Rand aufweist. Auf diesem gekrempten Rand kann ein Ausgießer oder ein Verschluß aufgeprellt sein. Das Aufprellen kann nach dem Befüllen des Schlauchbeutels durch das Loch erfolgen. In vorteilhafter Weise kann somit auf eine aufwendigere Siegelung verzichtet werden, wobei eine solche selbstverständlich zusätzlich oder alternativ möglich ist.

Somit kann ein Befüllen und anschließendes Verschließen des Schlauchbeutels unmittelbar hintereinander erfolgen. In vorteilhafter Weise können so die hygienischen Bedingungen während der Fertigung und Befüllung optimiert werden.

Ein weiterer wesentlicher erfindungsgemäßer Vorteil besteht darin, daß der Schlauchbeutel in seiner Gesamtheit, aber auch jeder seiner Bauteile, insbesondere Boden, Schulterteil und Deckel sowie Schlauchbeutelkörper sterilisierbar sind. Dies bedeutet mit anderen Worten, daß die verwendeten Materialien gegenüber herkömmlich angewandten Sterilisationsverfahren für Schlauchbeutel inert sind. Auf diese Weise ist es möglich, herkömmliche Sterilisationsverfahren wie Dampfsterilisation, Sterilisation mit Ethylenoxid und dergleichen geeignete Verfahren anzuwenden.

Somit wird die Aufgabe der Erfindung durch ein Verfahren zum Herstellen eines Schlauchbeutels mit einem Schlauchbeutelkörper und einem an-, insbesondere eingesiegelten Boden, insbesondere Stand- bzw. Stehboden sowie Deckel- und/oder Schulterteil gelöst, wobei ein im wesentlichen aus demselben Material wie der Schlauchbeutelkörper bestehender, eine steife vorgegebene Form aufweisender Boden sowie das Deckel- und/oder Schulterteil mittels Tiefziehen gefertigt und an siegelbaren Rändern des Bodens in einem Bodenbereich des Schlauchbeutelkörpers bzw. an siegelbaren Rändern des Deckel- und/oder Schulterteils in einem Kopfbereich des Schlauchbeutelkörpers mit siegelbaren Rändern des Schlauchbeutelkörpers dicht versiegelt wird, nämlich gemäß Anspruch 1.

Weitere Ausführungsformen der Erfindung ergeben sich aus den Unteransprüchen.

Nachfolgend wird die Erfindung anhand eines Ausführungsbeispiels beschrieben, das anhand einer Abbildung näher erläutert wird.

Hierbei zeigt:

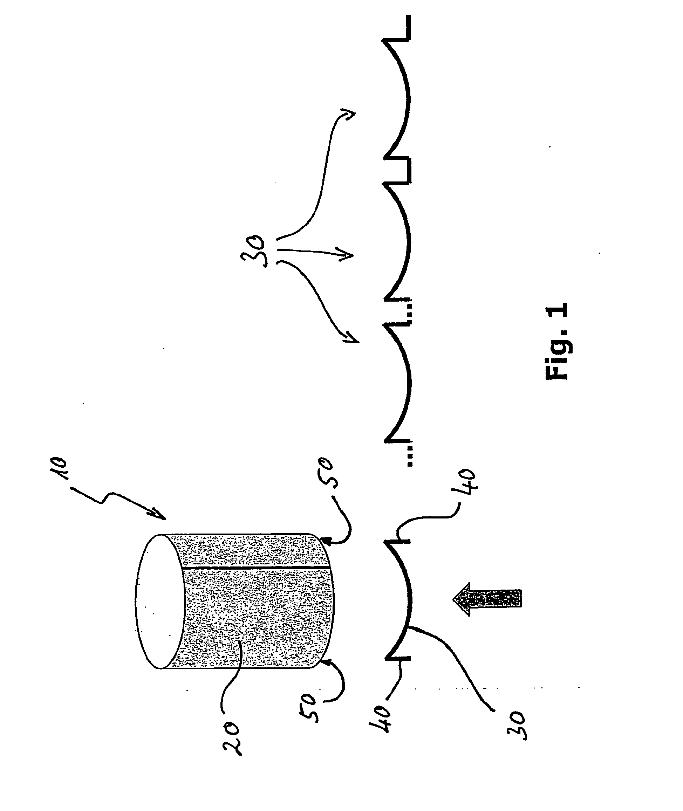

- Fig. 1: eine schematische Darstellung des Herstellverfahrens eines erfindungsgemäßen Schlauchbeutels am Beispiel eines Stand- bzw. Stehbodens.

In der nachfolgenden Beschreibung werden für gleiche und gleichwirkende Teile dieselben Bezugsziffern verwendet.

Fig. 1 zeigt von rechts nach links im schematischen Verlauf die Herstellung eines erfindungsgemäßen Schlauchbeutels 10 am Beispiel eines Stand- bzw. Stehbodens, der ebenfalls schematisiert angedeutet ist.

Zunächst wird ein Boden 30 aus einem Folienzuschnitt mittels Tiefziehen gefertigt. Bei diesem Tiefziehverfahren werden gleichzeitig mehrere Böden, die zunächst noch miteinander verbunden sind, hergestellt. Im weiteren Verlauf werden die Böden 30 voneinander getrennt. Dies ist in Fig. 1 durch die gepunktete Linie angedeutet.

Anschließend wird jeweils ein separierter Boden 30 in einen zugehörigen Schlauchbeutelkörper 20 in Richtung des dicken Pfeils eingesetzt. Hierzu wird der Boden 30 beispielsweise mittels eines Saugnapfes oder einer anderen Haltevorrichtung gehalten. Eine Alternative zum Einsetzen des Bodens 30 in den Schlauchbeutelkörper 20 besteht auch in einem Absenken des Schlauchbeutelkörpers 20 auf einen auf einer Unterlage stehenden Boden 30. Der Boden 30 ist vorzugsweise rund ausgebildet. Er kann jedoch auch Ecken, beispielsweise in der Form eines Quadrats oder eines Dreiecks, Fünfecks oder Sechsecks aufweisen. Nachdem der Boden 30 in den Schlauchbeutelkörper 20 eingesetzt ist, wird ein Rand 40 des Bodens 30 mit dem inneren Rand 50 des Schlauchbeutelkörpers versiegelt. Zum Versiegeln wird vorzugsweise thermische Energie und/oder Ultraschall angewandt.

In entsprechender Weise kann ein Deckelelement, beispielsweise in der Form eines Schulterteils, an dem Schlauchbeutel befestigt werden. An dieser Stelle sei angemerkt, daß es ebenso möglich ist, den Schlauchbeutel in den Boden einzusetzen. Hierzu wird der Boden um 180° nach oben gedreht und vorzugsweise so gefertigt, daß die sich ergebende Innenkante, die an den Rand 40 des Bodens 30 angrenzt, im wesentlichen den gleichen Durchmesser aufweist wie der Schlauchbeutelkörper 20. In diesem Falle würde die Innenseite des Randes 40 des Bodens 30 mit der Außenseite des Randes 50 des Schlauchbeutelkörpers 20 versiegelt werden.

### Bezugszeichenliste

- 10: Schlauchbeutel
- 20: Schlauchbeutelkörper
- 30: Boden
- 40: Rand des Bodens
- 50: Rand des Schlauchbeutelkörpers

## Patentansprüche

1. Verfahren zum Herstellen eines Schlauchbeutels (10) mit einem Schlauchbeutelkörper (20) und einem angesiegelten Boden (30), insbesondere Stand- bzw. Stehboden, sowie Deckel- und/oder Schulterteil, wobei der Schlauchbeutelkörper (20), der Boden (30), und Deckel- und/oder Schulterteil jeweils aus einem Laminat mit ein oder mehreren gegenüber Permeation bzw. Diffusion von Gasen dichten Barriereschichten gefertigt werden, und wobei der Boden (30) und/oder das Deckel- und/oder Schulterteil eine steife dreidimensionale Form mit siegelbaren Rändern aufweisen, die mit inneren oder äußeren Rändern des Schlauchbeutelkörpers (20) versiegelt werden,
**dadurch gekennzeichnet, dass**
ein Laminat mit Ethylvinylalkohol (EVOH) als Barriereschicht verwendet wird, und dass zunächst aus einem Folien- bzw. Laminatzuschnitt gleichzeitig mehrere Böden (30) mittels Tiefziehen hergestellt, diese dann anschließend voneinander getrennt werden, um dann jeweils mit ihren siegelbaren Rändern (40) mit einem siegelbaren inneren (50) oder äußeren Rand eines zugeordneten Schlauchbeutelkörpers (20) versiegelt zu werden.

2. Verfahren nach Anspruch 1,
**dadurch gekennzeichnet, dass**
für den Boden (30) und/oder das Deckel- und/oder Schulterteil ein im wesentlichen selbes Material wie für den Schlauchbeutelkörper (20) verwendet wird.

3. Verfahren nach Anspruch 2,
**dadurch gekennzeichnet, dass**
für den Boden (30) ein dickeres Material verwendet wird, als für den Schlauchbeutelkörper.

4. Verfahren nach einem der Ansprüche 1-3,
**dadurch gekennzeichnet, dass**
für den Schlauchbeutelkörper (20), Boden (30) und Deckel- und/oder Schulterteil ein Material verwendet wird, welches sterilisierbar ist.

5. Verfahren nach einem der Ansprüche 1-4,
**dadurch gekennzeichnet, dass** im Deckelteil ein Loch ausgestanzt wird, dessen Rand nach innen gekrempt wird, sodaß auf diesen gekrempten Rand ein Ausgießer oder Verschluß aufgedrellt und/oder aufgesiegelt wird.

## Claims

1. Method of producing a tubular pouch (10) having a tubular pouch body (20) and, sealed thereto, a base (30), especially a standing or stand base, and a lid and/or shoulder part, wherein the tubular pouch body (20), the base (30) and the lid and/or shoulder part are in each case made from a laminate having one or more barrier layer(s) that is/are proof against permeation and/or diffusion of gases, and wherein the base (30) and/or the lid and/or shoulder part has/have a rigid 3-dimensional shape having sealable borders which are sealed to inner or outer borders of the tubular pouch body (20),
**characterised in that**
a laminate containing ethyl vinyl alcohol (EVOH) is used as barrier layer, and **in that** first a plurality of bases (30) are simultaneously produced from a film blank or laminate blank by thermoforming, which are then separated from one another subsequently and then, in each case, sealed by their sealable borders (40) to a sealable inner (50) or outer border of an associated tubular pouch body (20).

2. Method according to claim 1,
**characterised in that**
substantially the same material is used for the base (30) and/or the lid and/or shoulder part as for the tubular pouch body (20).

3. Method according to claim 2,
**characterised in that**
a thicker material is used for the base (30) than for the tubular pouch body.

4. Method according to one of claims 1-3,
**characterised in that**
a material that is sterilisable is used for the tubular pouch body (20), base (30) and lid and/or shoulder part.

5. Method according to one of claims 1-4,
**characterised in that**
in the lid part there is stamped out a hole, the border of which is crimped towards the inside so that a pourer or closure is snap-fitted onto and/or sealed onto that crimped border.

## Revendications

1. Procédé de fabrication d'un sachet tubulaire (10) avec un corps de sachet tubulaire (20) et un fond scellé (30), en particulier un fond plat, ainsi qu'un élément de couvercle et/ou d'épaulement, dans lequel le corps de sachet tubulaire (20), le fond (30) et l'élément de couvercle et/ou d'épaulement sont chacun fabriqués dans un stratifié avec une ou plusieurs couches barrières empêchant le passage ou la diffusion de gaz, et dans lequel le fond (30) et/ou l'élément de couvercle et/ou d'épaulement présentent une forme tridimensionnelle rigide pourvue de bords scellables, qui sont scellés à des bords intérieurs ou extérieurs du corps de sachet tubulaire (20), **caractérisé en ce qu'**on utilise un stratifié avec de l'éthylène alcool vinylique (EVOH) en tant que couche barrière, et **en ce qu'**on fabrique tout d'abord et simultanément plusieurs fonds (30) par emboutissage dans un flan découpé dans une feuille ou un stratifié, puis on sépare ceux-ci les uns des autres pour enfin les sceller respectivement par leurs bords scellables (40) à un bord intérieur (50), ou extérieur, scellable d'un corps de sachet tubulaire associé (20).

2. Procédé selon la revendication 1, **caractérisé en ce que**, pour le fond (30) et/ou l'élément de couvercle et/ou d'épaulement, on utilise sensiblement le même matériau que pour le corps de sachet tubulaire (20).

3. Procédé selon la revendication 2, **caractérisé en ce que**, pour le fond (30), on utilise un matériau plus épais que pour le corps de sachet tubulaire.

4. Procédé selon l'une quelconque des revendications 1 à 3, **caractérisé en ce que**, pour le corps de sachet tubulaire (20), le fond (30) et l'élément de couvercle et/ou d'épaulement, on utilise un matériau qui peut être stérilisé.

5. Procédé selon l'une quelconque des revendications 1 à 4, **caractérisé en ce que** dans le couvercle est poinçonné un trou dont le bord est rabattu vers l'intérieur de sorte que l'on peut enfoncer par pression et/ou sceller un bec-verseur ou un bouchon sur ce bord rabattu.
